# EUROPEAN PATENT SPECIFICATION

(11) **EP 2 607 417 B1**
(45) Date of publication and mention of the grant of the patent: **11.02.2015**
(21) Application number: 11010092.2
(22) Date of filing: 22.12.2011
(51) Int. Cl.: C08K 5/00, C08K 5/13, C08L 23/02, F16L 9/127

(54) **Polyolefin composition with increased resistance against degradation caused by chlorine dioxide**
Polyolefin-Zusammensetzung mit verbesserter Beständigkeit vor Abbau durch Chlorindioxid
Composition de polyoléfine avec résistance améliorée contre la dégradation causée par le dioxyde de chlore

(43) Date of publication of application: 26.06.2013
(73) Proprietor: Borealis AG, 1220 Vienna (AT)
(72) Inventor: Hjertberg, Thomas, 45691 Kungshamn (SE); Costa, Francis, 4040 Linz (AT); Oderkerk, Jeroen, 44452 Stenungsund (SE); Gedde, Ulf, 14139 Huddinge (SE)
(74) Representative: Kador, Utz Ulrich

(56) References cited:
- EP-A1- 0 303 895
- WO-A1-2010/149607
- US-A1- 2005 148 700
- US-A1- 2010 233 403
- US-B1- 6 228 495

## Description

The present invention relates to a polyolefin composition with increased resistance to degradation caused by chlorine dioxide-containing water and to an article made of such a polyolefin composition. The present invention further relates to the use of the polyolefin composition for the production of an article having increased resistance to degradation caused by chlorine dioxide-containing water and to the use of a combination of particular types of antioxidants for increasing the resistance of the polyolefin composition against degradation caused by contact with chlorine dioxide-containing water.

Recent progresses in the manufacturing and processing of polymers have led to the application of plastics in virtually every aspect of modern day life. Besides many other applications, polyolefins are used for the preparation of pipes, fittings or storage containers for drinking water distribution systems. In the following disclosure all characteristics and effects supplied to pipes are also supplied to fittings and storage containers, even if not mentioned specifically. To ensure that the drinking water intended for human consumption is of good quality, disinfection is often used. Disinfection means the removal, deactivation or killing of pathogenic microorganisms.

However, polymeric compounds are prone to aging under the effects of oxidants, light and heat. This results in a loss of lifetime such as loss of strength, stiffness and flexibility, discoloration and scratching as well as loss of gloss.

It is well-known in the art that antioxidants and light stabilizers can prevent or at least reduce these effects. Several types of additives are added to polymers to protect them during processing and to achieve the desired end-use properties. Additives are generally grouped into stabilizers and modifiers. Stabilizers, like antioxidants, traditionally and currently used comprise sterically hindered phenolics, aromatic amines, hindered amine stabilizers, organo-phosphites/phosphonites and thioethers. However, appropriate combinations of stabilizers have to be carefully selected, dependent upon the desired final properties, the polymeric article should have. It is known that chlorine is used as disinfectant in water treatment to prevent spread of infectious diseases. One of the disadvantages of chlorinated water is the presence of chlorine-containing reaction products of chlorine with organic material in the drinking water. Some of said reaction products are discussed to provide health risks.

It is also known that most materials, including many polymers such as polyolefins, may be affected by chlorinated water. Results from pressure testing in laboratories and experience from the field have shown that high concentration of chlorine in water can cause early brittle fracture in polyolefin pipes.

An effective alternative disinfectant for drinking water systems is chlorine dioxide, (ClO₂). Chlorine dioxide is a stronger oxidizing agent than chlorine and does not form halogenated by-products. It does not hydrolyze in water but remains in solution as a dissolved gas. Polyolefin resins have shown to have a lower lifetime in chlorine dioxide containing water than in chlorine containing water. Thus, chlorine-resistant polyolefin resins may not be resistant against chlorine dioxide.

Nevertheless, also chlorine dioxide containing water is in permanent contact with the polymeric material. Due to the permanent contact to the inner surface of the polymeric material, deterioration of the polyolefin composition is caused.

It has been found that antioxidants used in polyolefin compositions for pipes known to provide a good resistance to chlorinated water do not necessarily provide satisfactory resistance against chlorine dioxide-containing water. Thus, there is still a need for a more efficient antioxidant system, which provides a better protection against ClO₂ containing water. Thus allows a longer lifetime of an article, e.g. a pipe, a fitting or a storage container made from a polyolefin composition containing such an antioxidant.

A further important issue as regards the presence of antioxidants in polyolefin compositions is the aim to avoid contamination of media transported e.g. in a pipe made of such a polyolefin composition. This is particularly important in case of a pipe transporting drinking water. Generally speaking, it is preferred to use as low concentrations of antioxidant as possible in order to lower the amount of antioxidant which may possibly be extracted from the pipe into the transported water. Further in this context, it is desirable that the antioxidant used has a low tendency to extraction from the pipe to the transported water.

The admissible amounts of harmful compounds within the drinking water are fixed by legal requirements and even stricter requirements are to be expected with the introduction of the so-called "European acceptance scheme".

Migration behavior of stabilizers and modifiers added to polyolefin-based materials is dependent from a number of different properties such as diffusion rate of the molecules within the polymer matrix, chemical stability of the additives, type of additive decomposition products, etc. To give an example, a specific additive compound might have improved chemical stability, thereby having a beneficial effect on migration behavior. Other less stable additive compounds might, on the other hand, decompose into compounds easily diffusing through the polymer matrix, thereby having a detrimental effect on migration behavior. Furthermore, it has to be taken into account that an improvement in migration behavior must not be obtained on the expense of stabilization of the polymer matrix. Thus, providing an additive composition of low migration tendency is not straightforward but rather needs a careful selection of appropriate compounds.

However, to further improve drinking water quality and considering stricter legal requirements to be expected in the near future, it is still highly appreciated to provide polymeric materials of high thermal and chemical stability.

EP 1 911 798 A1 discloses a composition comprising a polyolefin (A); a compound (B) which has a diphosphite structure; c) a phenolic compound (C); and d) optionally, an UV-light stabilizer (D), wherein the total amount of migrated compounds (B), (C) and, if present, (D), as well as their decomposition products are below certain threshold levels in the composition. The composition shows reduced migration of additives into water in contact with composition samples which were leached with unchlorinated water according to EN-12873-1 at room temperature (23 °C).

EP 2 199 330 A1 relates to a polyolefin composition with good resistance to degradation caused by chlorine dioxide-containing water and at the same time showing low migration of the used additives and its decomposition products, especially phenols, out of the composition. The polyolefin composition comprises a polyolefin base resin (A), an antioxidant (B) having a chroman-6-ol structure, an antioxidant (C) having a phenolic structure, wherein the entire molecule does not comprise an ester group, and the concentration of antioxidant (C) in the polyolefin composition is at least 1200 ppm, based on the total composition. The compositions show resistance to ClO₂-containing water at 90 °C according to ASTM F2263-03 and reduced phenolic migration into water according to EN-12873-1 at room temperature (23°C).

EP 2 014 704 A1 relates to a polyolefin composition wherein the migration of the used additives and its decomposition products, especially phenols, out of the composition is low and thus the composition is particularly suitable for pipe applications, e.g. for drinking water. The polyolefin composition comprises a polyolefin (A), a vitamin E-type stabiliser (B) and a phenolic stabilizer (C) and, optionally, an UV stabilizer (D).

EP 1 911 799 A1 relates to a polyolefin composition with increased resistance to degradation caused by ClO₂ containing water and to a pipe made of such a polyolefin composition, wherein an antioxidant used in the polyolefin composition has a low tendency for extraction by the water transported in a pipe. The polyolefin composition comprises a polyolefin base resin and an antioxidant, wherein said polyolefin composition has a lifetime of at least 200 h in a test measuring the resistance against ClO₂ containing water at 90 °C and at a concentration of ClO₂ of 4 ppm wherein the equipment used is according to ASTM F2263-03.

EP 0303895 A1 discloses a radiation sterilizable composition which comprises (a) a semi-crystalline olefin (polypropylene) and among others a co-stabilizer (d) which may be CYASORB^{®} UV 2908 or CYASORB® UV 3346 Preferred is the use of a two-component stabilizer system, which may be e.g. CYANOX^{®} 2246 in combination with a thioester or CYASORB^{®} UV 2908.

US 6,228,495 B1 discloses polyolefin compositions for use as insulation for wire and cable comprising (a) one or more polyolefins, (b) one or more primary antioxidants, (c) one or more metal deactivators. As antioxidants vitamin E, Irganox^{®}, or Irganox^{®} 3114 is mentioned. An OIT test according to ASTM D3895 is described.

WO 2010/149607 A1 discloses chlorine dioxide-resistant polyethylene pipes and antioxidant combinations suitable for this purpose. The increased resistance to chlorine-dioxide is determined in a chlorine-dioxide resistance test on the basis of OIT values. US 2010/0233403 A1 discloses a combination of Irganox^{®} 1330 with Irganox^{®} 3114 for use with chlorinated water.

US 2005/148700 A1 discloses polyolefin compositions and polyolefin pipes which are in permanent contact with chlorinated water comprising (a) a polyolefin and (b) a stabilizer. The compositions may comprise further co-stabilizers such as antioxidants, e.g. vitamin E, Irganox^{®} 1330 or Irganox^{®} 3114.

For pipes degraded by chlorine used as the disinfectant it was observed that the antioxidant was consumed by a direct reaction with chlorine. When chlorine dioxide is used as disinfectant it was found that chlorine dioxide is much more aggressive against the pipe polymer material than chlorine. It was found that the antioxidant is rapidly consumed by chlorine dioxide down to a depth of ca. 1 mm. This leaves the polymer unprotected and an oxidation occurs in a layer that is 50 - 200 µm thick. Due to the stresses in a pipe microcracks will form in the transition from the degraded to the unaffected material and due to the chemical attack in the crack tip the crack will propagate into the material. By the above mechanisms, the time of degradation of polymer materials may be accelerated after the depletion of the antioxidant from the polyolefin composition which should serve as a protection against the attack of the disinfectant in the water with which the polymeric surfaces come into contact.

Hence, there is still a need for improved polyolefin compositions suitable for pipe, fitting or storage applications, particularly for polyolefin compositions having an increased stability in contact with chlorine dioxide-containing water.

Thus, it is an object of the present invention to provide a polyolefin composition for an article, such as a pipe, a fitting or a storage container having an increased resistance against chlorine dioxide, particularly when the article is in permanent contact with chlorine dioxide-containing water.

The present invention is based on the finding that the object of the invention can be achieved, if the polyolefin composition comprises a specific combination of several types of antioxidants.

Therefore, the present invention relates to a polyolefin composition comprising
a) a polyolefin base resin (A),
b) an amount of 0.01 to 0.5 wt.-%, based on the total weight of the polyolefin composition, of at least one antioxidant (B) having an initial oxygen induction time (OIT_{190°C}) of more than 35 min., determined according to the OIT test at 190 °C described herein and having a slope of the curve, when OIT_{190°C}, in minutes, is recorded as a function of exposure time, in minutes, in a chlorine dioxide degradation test as described herein, of at least -0.07, and
c) an amount of 0.01 to 0.5 wt.-%, based on the total weight of the polyolefin composition, of at least one antioxidant (C) having an initial oxygen induction time (OIT_{190°C}) of not more than 35 min., determined according to the OIT test at 190 °C described herein and having a slope of the curve, when OIT_{190°C}, in minutes, is recorded as a function of exposure time, in minutes, in a chlorine dioxide degradation test as described herein of less than -0.07,
d) an amount of 0.01 to 0.2 wt.-%, based on the total weight of the polyolefin composition, of at least one antioxidant (D) according to formula (I): 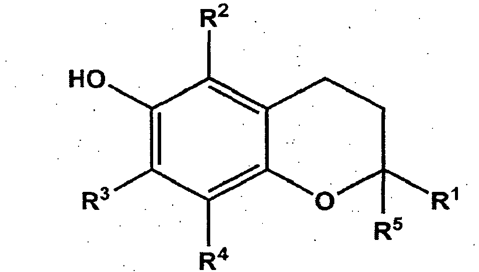 wherein R¹, R², R³, R⁴ and R⁵ independently are H, or non-substituted or substituted aliphatic or aromatic hydrocarbyl radicals which may comprise heteroatoms,
   wherein said polyolefin composition shows a resistance against water containing 10 ppm chlorine dioxide at 70 °C and at a pH of 6.8 ± 0.1 of at least 450 min., expressed as the time to reach 50% of the initial OIT (OIT_{(190°C}), _{50%}), determined according to the chlorine dioxide degradation test as described herein.

It has now surprisingly been found that the combination of at least one antioxidant (B) which has a relatively high initial OIT_{190°C} (determined according to the OIT test at 190 °C as described below), but a relatively fast decrease of OIT_{190°C} with exposure time to chlorine dioxide-containing water (determined according to the degradation test described below) with at least one antioxidant (C) which has a relatively low initial OIT_{190°C}(determined according to the OIT test at 190 °C as described below), but a relatively slow decrease of OIT_{190°C} with exposure time to chlorine dioxide-containing water (determined according to the degradation test described below) and with at least one antioxidant (D) can drastically improve the overall stability and resistance of a polyolefin composition and article exposed to chlorine dioxide-containing water that comprises a combination of at least one antioxidant (B), at least one antioxidant (C), and at least one antioxidant (D). Thus the stability of such a polyolefin composition and article made therefrom in permanent contact with chlorine dioxide-containing water is markedly prolonged which article comprises the polyolefin composition including the combination of the at least two antioxidants described above.

Without being bound by theory it is assumed that the following phenomena influence the stability of an antioxidant against the radical attack of the ClO₂ molecule. The oxidation reaction depends on the ionization potential of the antioxidant and to have an antioxidant that is stable against oxidizing species like ClO₂ the ionization potential should be as high as possible. The Hammet constant, which is a measure of the electron density of an aromatic ring system, is increased by increasing the electron-withdrawing capacity of the substituent and thus the ionization potential increases and the molecule becomes more stable against ClO₂.

An antioxidant with strong electron-withdrawing groups can thus be more resistant against ClO₂ but at the same time it will be a less efficient antioxidant, once it has been attacked by the oxidizing molecule. Interactions at the aromatic group are another way to influence the reactivity of the ring system. Such interactions may be intermolecular or intramolecular.

The test for selecting the antioxidant (B) and (C) is based on an adaption of the technique published by B. Azhdar, W. Yu, T. Reitberger and U.W. Gedde, in Polymer Testing, Volume 28, Issue 6, September 2009, pages 661-667. Instead of using squalane as matrix the antioxidants have been introduced into a polyethylene composition at a concentration of between 0.1 wt-% and 0.3 wt-%. From this composition tapes of a thickness of 0.3 mm were produced by extrusion. Pieces of the tape were exposed to water containing 10 ppm ClO₂ at a pH of 6.8 ± 0.1 and at 70 °C and at regular time intervals small samples of the tapes are withdrawn for measuring the oxygen induction time (OIT). The test is described in detail in the method section below. With increasing exposure time in the ClO₂ containing water the antioxidant is continuously degraded by the disinfectant and the OIT is decreased.

Antioxidant (B) is characterized by a relatively high initial OIT_{190°C} of more than 35 min. determined according to the OIT_{190°C} test described below and a relatively fast decrease of the OIT_{190°C} value upon exposure to water containing 10 ppm ClO₂ at a pH of 6.8 ± 0.1 and at 70 °C. This velocity at which OIT_{190°C} is decreased as a function of exposure time can be depicted as the slope of the curve, when OIT_{190°C} (in min.) is recorded as a function of exposure time to chlorine dioxide (in min.). This parameter is designated as the "degradation velocity" or "depletion velocity" of the material against ClO₂-containing water. Antioxidant (B) exhibits a slope of said OIT_{190°C} decrease curve of at least -0.07.

Antioxidant (C) is characterized by a relatively low initial OIT_{190°C} of not more than 35 min. determined according to the OIT_{190°C} test described below and a relatively slow decrease of the OIT_{190°C} value after exposure to water containing 10 ppm ClO₂ at a pH of 6.8 ± 0.1 and at 70 °C. This slow decrease of OIT_{190°C} with exposure time is expressed as the slope of the function, when OIT_{190°C} is recorded as a function of exposure time to said ClO₂-containing water. Antioxidant (C) exhibits a slope of said OIT_{190°C} decrease function of less than -0.07.

Surprisingly it was found that a combination of an antioxidant (B) whose resistance to chlorine dioxide is initially rather high (in terms of the initial OlT_{190°C} parameter as described above), but decreased rather fast (in terms of the OIT_{190°C} decrease as described above) with an antioxidant (C), whose resistance to chlorine dioxide is initially rather low (in terms of the initial OIT_{190°C} parameter as described above), but decreased rather slowly (in terms of the OIT_{190°C} decrease as described above), and with at least one antioxidant (D) gave very good stability against ClO₂-containing water of a polyolefin composition containing the combination of at least one antioxidant (B), at least one antioxidant (C), and at least one antioxidant (D).

The exposure time to chlorine dioxide in minutes to reach 50% of the initial OIT_{210°C} is taken as the half life degradation velocity or the half life depletion velocity (OIT_{(210°C),50%}) of the respective polyolefin composition containing a selected combination of antioxidants in contact with chlorine dioxide. This half life degradation velocity of a polyolefin composition comprising the inventive combination of antioxidant (B) and (C) is drastically decreased which can be determined by an increased OIT_{(210°C),50%} value of at least 450 min., preferably at least 500 min., more preferably at least 550 min. and even more preferably at least 600 min. after exposure. in 10 ppm chlorine dioxide-containing water at 70 °C and at a pH of 6,8 ± 0,1, determined according to the degradation test described below.

According to a preferred embodiment of the present invention, the combination of antioxidant (B) and (C) may be selected from the following groups.

The at least one antioxidant (B) is preferably selected from the group consisting of Tris(4-tert-butyl-3-hydroxy-2,6-dimethylbenzyl) isocyanurate (Cyanox^{®} 1790), pentaerythrityl-tetrakis(3-(3',5'-di-tert. butyl-4-hydroxyphenyl)-propionate) (Irganox^{®} 1010), 1,2-Bis(3,5-di-tert-butyl-4-hydroxyhydrocinnamoyl)hydrazide (Irganox^{®} MD 1024), 4, 4'-Bis (alpha, alpha-dimethylbenzyl)diphenylamine (Naugard^{®} 445), 1,3,5-tris(3,5-di-tert-butyl-4-hydroxybenzyl)-2,4,6-trimethylbenzene (Irganox^{®} 1330), ethylene bis[3,3-bis(3-tert-butyl-4-hydroxyphenyl)butyrate] (Hostanox^{®} 03), and octadecyl 3,5-di-(tert)-butyl-4-hydroxyhydrocinnamate (Irganox^{®} 1076)

The at least one antioxidant (C) is preferably selected from the group consisting of 1,3,5-tris(3,5-di-tert-butyl-4-hydroxybenzyl) isocyanurate (Irganox^{®} 3114) and hexadecyl 3,5-bis-tert-butyl-4-hydroxybenzoate (Cyasorb^{®} 2908)

It should be understood that any combination of at least one antioxidant (B) and at least one antioxidant (C) is encompassed in the present invention. Two or more of each antioxidant (B) and (C) may also be combined.

Antioxidant (B) is contained in the polyolefin composition in an amount of from 0.01 to 0.5 wt.-%, preferably from 0.05 to 0.3 wt.-%, more preferably from 0.1 to 0.2 wt.-%, based on the weight of the total composition. Antioxidant (C) is contained in the polyolefin composition in an amount of from 0.01 to 0.5 wt.-%, preferably from 0.05 to 0.3 wt.-%; more preferably from 0.1 to 0.2 wt.-%, based on the weight of the total composition.

According to the present invention, the polyolefin composition further comprises an amount of 0.01 to 0.2 wt.-%, based on the total weight of the polyolefin composition, of at least one antioxidant (D) according to formula (I): 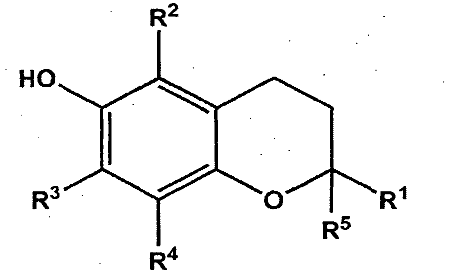 wherein R¹, R², R³, R⁴ and R⁵ independently are H, or non-substituted or substituted aliphatic or aromatic hydrocarbyl radicals which may comprise heteroatoms,

The heteroatoms which may be present in the non-substituted or substituted aliphatic or aromatic hydrocarbyl radicals R¹, R², R³, R⁴ and/or R⁵ of antioxidant (D) according to formula (I) may be oxygen, sulphur, nitrogen, phosphorus or the like. It is, however, preferred that R¹, R², R³, R⁴ or R⁵, more preferred R¹, R², R³, R⁴ and R⁵, do not comprise heteroatoms, i.e. are non-substituted or substituted aliphatic or aromatic hydrocarbyl radicals only, or, as mentioned, H.

Furthermore, preferably R², R³, R⁴ or R⁵, more preferably R², R³, R⁴ and R⁵, are H, or saturated aliphatic hydrocarbyl radicals comprising from 1 to 5 carbon atoms, and still more preferably R², R³, R⁴ or R⁵, more preferably R², R³, R⁴ and R⁵, are H, or methyl groups.

Furthermore, preferably R⁵ is a methyl group, regardless of the nature of the other residues R² to R⁴

In an especially preferred embodiment, R⁴ and R⁵ are methyl groups, and R² and R³ are H, or methyl groups.

Most preferably, R², R³, R⁴ and R⁵ are all methyl groups.

Still further, preferably R¹ is a non-substituted or substituted aliphatic or aromatic hydrocarbyl radical containing from 5 to 50 carbon atoms, more preferably R¹ is a non-substituted or substituted aliphatic hydrocarbyl radical containing from 5 to 50, more preferably from 10 to 30, carbon atoms, and most preferably R¹ is a 4,8,12-trimethyl-tridecyl group.

Still more preferred, antioxidant (D) is 2,5,7,8-Tetramethyl-2-(4',8',12'-trimethyltridecyl)chroman-6-ol (Irgano^{®} E 201 or Vitamin E).

Antioxidant (D) is contained in the polyolefin composition in an amount of from 0.01 to 0.2 wt.-%, preferably from 0.02 to 0.1 wt.-%, more preferably from 0.05 to 0.1 wt.-%, based on the weight of the total composition.

The effect of the antioxidant combination in a polyolefin composition according to the present invention on the resistance against chlorine dioxide and the degradation velocity is measured by the determination of the "oxygen induction time" at 210 °C, (OIT_{210°C}) of the polyolefin composition.

The details of the oxygen induction time measurement are explained in the experimental section below. Under standardized conditions the antioxidant is consumed in the OIT test over time by contact with an oxidizing agent (here: oxygen gas), until it is totally depleted. At this point the polymer sample degrades or oxidizes liberating additional heat (exotherm reaction). The time (in minutes) it takes for this exotherm reaction to appear from the time at which the oxidizing agent is introduced, is reported as the oxygen induction time (OIT), and is a measure of the oxidation stability of the material.

For determination of the degradation resistance and degradation velocity under exposure to chlorine dioxide, sample tapes (width 35 mm, thickness 0.3 mm) were exposed to water containing 10 ppm ClO₂ at a pH of 6.8 ± 0.1 at 70 °C. After constant time intervals the samples were removed from the chlorine dioxide-containing water and subjected to the above OlT_{210°C} test to determine the OIT_{210°C} in minutes as a function of the exposure time to chlorine dioxide.

In these measurements, three parameter are specifically important:
- The initial OIT_{190°C}, i.e. the time in minutes until degradation of the polyolefin after complete depletion of the antioxidant(s) begins, without exposure of the sample in chlorine dioxide; and
- the velocity at which OIT_{190°C} is decreased as a function of exposure time which can be depicted as the slope of the curve, when OIT_{190°C} (in min.) is recorded as a function of exposure time to chlorine dioxide (in min.). This parameter is designated as the "degradation velocity" of the material against ClO₂-containing water.

The above two parameters are used for selecting the antioxidant (B) and the antioxidant (C) according to the present invention. In these tests, where the OIT is determined at 190 °C, only a single antioxidant was incorporated into the polyolefin and tested.
- The OIT_{(210°C),50%}, i.e. the exposure time in chlorine dioxide in minutes after which OIT_{210°C} reaches approximately 50% of the value at exposure time of 0 min. (initial OIT_{210°C}) which is also designated herein as the "half life degradation velocity" of the material.The latter parameter is used to determine the resistance against chlorine dioxide of a polyolefin composition containing a combination of at least two antioxidants. In this test the OIT is determined at 210 °C.

It is a further effect of the present invention that the resistance of the polyolefin composition against ClO₂-containing water is significantly increased, expressed as an increase in the time to reach OIT_{(210°C),50%}, compared with materials containing conventional antioxidant combinations such as pentaerythrityl-tetrakis(3-(3',5'-di-tert. butyl-4-hydroxyphenyl)-propionate) (Irganox^{®} 1010), 1,3,5-tris(3,5-di-tert-butyl-4-hydroxybenzyl)-2,4,6-trimethylbenzene (Irganox^{®} 1330), Tris(2,4-di-tert. butylphenyl)-phosphite (Irgafos^{®} 168) and a Vitamin E derivative in any combination.

This signifies in turn that the degradation due to permanent contact to chlorine dioxide of a polyolefin composition according to the present invention having incorporated the inventive combination of antioxidants takes place at a significantly later time period than observed in polyolefin compositions having incorporated previously known antioxidants or combinations thereof.

The term "base resin" denotes the entirety of polymeric components in the polyolefin composition according to the invention, usually making up at least 90 wt% of the total composition.

The favorable effect of the antioxidants according to the present invention is not dependent on the type of polyolefin base resin used. The base resin may therefore be any polyolefin or polyolefin composition.

However, it is preferred that the base resin (A) comprises an olefin polymer comprising at least one olefin having 2 to 8 carbon atoms. At least one ethylene homo- or copolymer or a propylene homo- or copolymer are especially preferred. Preferably, the comonomer is selected from ethylene, propylene and alpha-olefins with 4 to 8 carbon atoms. Still more preferably ethylene, propylene or an alpha-olefin selected from 1-butene, 1-hexene, 4-methyl-1-pentene and 1-octene is used as the comonomer.

The amount of comonomer in the base resin (A) is preferably between 0.1 mol% and 7.0 mol%.

It is particularly preferred that the base resin (A) comprises an ethylene homo- or copolymer or a propylene homo- or copolymer, more preferably that the base resin (A) consists of an ethylene homo- or copolymer or a propylene homo- or copolymer.

In one embodiment of the invention the base resin comprises two or more polyolefins, more preferably polyethylene fractions with different weight average molecular weight. Such resins usually are denoted as multimodal resins.

Polyolefin, in particular polyethylene compositions comprising unimodal or multimodal or crosslinked resins are frequently used e.g. for the production of pipes and fittings due to their favourable physical and chemical properties as e.g. mechanical strength, corrosion resistance and long-term stability. Such compositions are described e.g. in EP 0 739 937 and WO 02/102891. The term molecular weight used herein generally denotes the weight average molecular weight M_{w}.

As mentioned, usually a polyethylene composition comprising at least two polyethylene fractions, which have been produced under different polymerisation conditions resulting in different weight average molecular weights for the fractions, is referred to as "multimodal". The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In a preferred embodiment wherein the base resin consists of two polyethylene fractions, the fraction having a lower weight average molecular weight is denoted fraction (A), the other is denoted fraction (B).

Fraction (A) preferably is an ethylene homopolymer.

Fraction (B) preferably is an ethylene copolymer, and preferably comprises at least 0.1 mol% of at least one alpha-olefin comonomer. The amount of comonomer is preferably at most 14 mol%.

In a preferred embodiment wherein the polyolefin composition is a polyethylene composition, the base resin of the polyethylene composition preferably comprises at least 0.1 mol%, more preferably at least 0.3 mol%, and still more preferably at least 0.7 mol% of at least one alpha-olefin comonomer. The amount of comonomer is preferably at most 7.0 mol%, more preferably at most 6.0 mol%, and still more preferably at most 5.0 mol%.

As an alpha-olefin comonomer, preferably an alpha-olefin having from 4 to 8 carbon atoms is used. Still more preferably an alpha-olefin selected from 1-butene, 1-hexene, 4-methyl-1-pentene and 1-octene is used.

The polyolefin base resin preferably has an MFR₅ (190 °C, 5 kg) of from 0.01 to 5.0 g/10min, more preferably from 0.1 to 2.0 g/10min, still more preferably from 0.2 to 1.5 g/10min, and most preferably from 0.5 to 1.0 g/10min.

The density of the base resin preferably is from 920 to 960 kg/m³, more preferably is from 930 to 958 kg/m³, and most preferably is from 936 to 955 kg/m³.

In addition to the base resin and the antioxidants, usual additives for utilization with polyolefins, such as pigments (for example carbon black), stabilizers, antiacids and/or anti-UVs, antistatic agents and utilization agents (such as processing aid agents) may be present in the polyolefin composition.

The amount of such additives usually is 10 wt% or below.

Carbon black is a generally used pigment, which also acts as an UV-absorber. Typically carbon black is used in a final amount of from 0.5 to 5 % by weight, preferably from 1.5 to 3.0 % by weight. Preferably the carbon black is added as a masterbatch, i.e. Carbon black master batch (CBMB) where it is premixed with a polymer, preferably polyethylene , in a specific amount as e.g. shown in the Examples.

The polymerisation catalysts for the production of the base resin include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is a non-silica supported ZN catalyst, and most preferably a MgCl₂-based ZN catalyst.

The Ziegler-Natta catalyst further preferably comprises a group 4 (group numbering according to new IUPAC system) metal compound, preferably titanium, magnesium dichloride and aluminum.

The catalyst may be commercially available or be produced in accordance or analogously to the literature. For the preparation of the preferable catalyst usable in the invention, reference is made to WO 2004/055068 and WO 2004/055069 of Borealis and EP 0 810 235. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235.

The composition is preferably produced in a process comprising a compounding step, wherein the base resin which is typically obtained as a powder from the reactor, together with the antioxidants and optionally other additives is extruded in an extruder to yield the composition according to the present invention.

Of course, when using the inventive composition, further compounds selected from conventional additives, such as stabilizers, modifiers, fillers, minerals and lubricants may be added for improving processability and surface characteristics thereof.

The composition of the present invention is preferably used for the manufacture of an article having increased resistance against chlorine dioxide-containing water. Such articles may preferably include pipes or fittings - black as well as natural (i.e. non-colored) or colored pipes/fittings. Preferably, such a pipe or fitting is used in a drinking water supply system. It is furthermore preferred that the pipe is a cold or hot water pipe, i.e. that it is designed for the transport of cold or hot water. The composition may further preferably be used for the manufacture of an article for storage of water or aqueous liquids. Such an article may preferably include tanks, reservoirs or containers such as bottles.

Hence, the present invention is also directed to an article, preferably a pipe, a fitting or a storage container comprising the inventive polyolefin composition mentioned above including all the preferred embodiments. Such articles show an improved resistance against chlorine dioxide-containing water.

The pipes, fittings or storage containers are preferably produced by extrusion of the polyolefin composition. The articles may also be produced by blow molding such as extrusion blow molding or injection molding.

The present invention is therefore also directed to the use of a polyolefin composition according to the invention, including all of the preferred embodiments, for the production of a pipe, a fitting or a storage container.

The present invention is also directed to the use of said inventive pipe/fitting for the transport of chlorine dioxide-containing water or to the use of the inventive container for the storage of chlorine dioxide-containing water.

Finally, the present invention is further directed to the use of a combination of antioxidants (B) and (C) as defined above, including all of the preferred embodiments, in a polyolefin composition for increasing the resistance of an article such as a pipe, a fitting or a storage container made of said polyolefin composition against permanent contact with chlorine dioxide-containing water.

Said increased resistance to chlorine dioxide is shown by its increased OIT_{(210°C),50%} time recorded after exposure to chlorine dioxide-containing water according to the test method described below compared to an article made of a corresponding polyolefin composition without any antioxidant, preferably compared to an article made of a corresponding polyolefin composition comprising antioxidants or a combination of antioxidants other than the combination of antioxidants (B) and (C) in an equal concentration.

A "corresponding polyolefin composition" denotes a polyolefin composition which comprises the same base resin and the same additives in the same concentration as the inventive polyolefin composition besides the combination of antioxidants (B) and (C).

The "equal concentration" of antioxidants addresses the sum of concentration of antioxidants (B) and (C) and the sum of concentration of antioxidants in corresponding polyolefin compositions.

### Examples

### 1. Definitions and measurement methods

### a) Density

Density is measured according to ISO 1183-1:2004 (method A) on compression moulded specimen prepared according to EN ISO 1872-2 (February 2007) and is given in kg/m³.

### b) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene and determined at a loading of 5.00 kg (MFR₅).

### c) Evaluation method for the selection of a single antioxidant (B) or (C)

This test served to determine whether a given antioxidant is defined as an antioxidant of type (B) as defined herein or as type (C) as defined herein. In this test single antioxidants were incorporated into the polyethylene material, as specified above and the OIT_{190°C} values were determined. The time in minutes obtained in the OIT_{190°C} test without exposure of the sample to chlorine dioxide is the "initial OIT_{190°C}". The test method for assessing the degradation behaviour of stabilizers in polyolefins exposed to chlorine dioxide-containing water was derived from the method established by B. Azhdar, W. Yu, T. Reitberger and U.W. Gedde, published in Polymer Testing, Volume 28, Issue 6, September 2009, pages 661-667.

This paper presented a new method for studying the efficiency of phenolic antioxidants in polyolefins exposed to chlorinated water media (Cl₂ and ClO₂ in water). A liquid hydrocarbon analogue, squalane, was used and distributed as droplets in the aqueous phase. Sampling from the organic phase was readily carried out and the concentration of remaining efficient phenolic antioxidant was assessed by standard methodology using differential scanning calorimetry.

In the test method applied here, the following modification was performed. Instead of using a squalane phase, polyethylene compounds containing different additives with a concentration of 0.1 wt-% were used. The compounds were then extruded in the form of a thin tape (0.3 mm thickness) and these tapes were then inserted into the chlorine dioxide-containing water using the same set up as discussed in Polymer Testing, Volume 28, Issue 6, September 2009, pages 661-667. The part of the tape samples were then withdrawn from the water contact at different intervals of time and analyzed by OIT_{190°C} measurement.

A stock solution with 16,000 ppm chlorine dioxide was prepared by reacting sodium chlorite with chlorine gas in water solution. Sodium chlorite (210 g) was dissolved in 7 l water. Chlorine gas was bubbled for 4 h through the solution until the solution was saturated. Nitrogen gas was then gently bubbled through the solution for ca. 8 h and the gas stream was led through a column with sodium chlorite to eliminate residual Cl₂. This transferred the formed chlorine dioxide to another flask with pure water. The stock solution was diluted with deionised water to a final ClO₂ concentration of 10 ± 1 ppm.

The chlorine dioxide concentration in the water was determined by adding concentrated sulphuric acid (20 ml) and 2 wt.% solution of potassium iodide in water (10 ml) to 10 ml of the chlorine dioxide water. The yellow solution was titrated with 0.1 M Na₂S₂O₃ until the yellow colour disappeared. It should be noted that one mole of ClO₂ is equivalent to five moles of S₂O₃²⁻.

The pH was held constant at 6.8 ± 0.1 using the following buffer solution. A buffer solution adjusting the pH to 6.8 ± 0.1 was prepared based on 0.1 M NaOH (22.4 ml) and 0.1 M KH₂PO₄ (50 ml) and added to a chlorinated water solution (219 ml). The pH of the final solution was measured at room temperature using a WTWpH330i electrode.

The glass flask containing the test specimen with antioxidant (kept at 70 °C after preparation) and the chlorine dioxide-containing water medium (at a concentration of 10 ppm) was kept at 70 ± 1 °C by two heaters (a hot plate and an enclosing heater). The enclosing heater was controlled with a PID controller (Eurotherm 914). A cooler fed with cold (ca. 10 °C) water was placed on top of the glass flask to minimize the loss of volatiles. The reaction chamber was kept at 70 ± 1 °C with access to air. The aqueous solution was regularly checked with regard to chlorine dioxide concentration by the titration method described above.

The specific conditions in this test set-up were:
Concentration of antioxidant: 0.1 wt.-%, based on the weight of the polyolefin ;
concentration of ClO₂: 10 ppm; pH of 6.8 ± 0.1; temperature 70°C.

The OIT test of single antioxidant test specimen was always performed at a temperature of 190 °C (OIT_{190°C} measurement) as described under v) below.

Specifically, OIT_{190°C} decrease as a function of exposure time to chlorine dioxide-containing water was recorded and the slope of the curve was determined. The flatter the slope is, the greater the OIT_{190°C} value as a function of exposure time to chlorine dioxide was recorded and the stronger the resistance of the test sample against chlorine dioxide-containing water could be observed.

### i) Components of the polymer compositions of the invention:

MDPE: A bimodal medium density polyethylene powder produced in the proprietary Borstar PE reactor (low pressure polyethylene) using a Ziegler-Natta catalyst (Lynx^{®}200, available from BASF SE) which has a density of 942.5 kg/m³ and a MFR (190°C/5.0 kg load) = 0.78 g/10 min.

### ii) Compounding of the compositions:

Polymer powder was added to a pilot scale extruder (Prism TSE 24TC) together with the selected additives. The obtained mixture was melt mixed in conditions given in the table below and extruded to a string and pelletized.

| Set Values Temperatures (°C) | | | | | | Extruder | | |
|---|---|---|---|---|---|---|---|---|
| Zone 1 | Zone 2 | Zone 3 | Zone 4 | Zone 5 | Zone 6 | rpm | Output (kg/h) | Pressure (bar) |
| 110 | 150 | 150 | 150 | 150 | 150 | 238 | 6 | 65 |

### iii) Sample preparation:

Tapes with a dimension of 35 mm width and 0.3 mm thickness were extruded on a Collin teach-line E 20T extruder. The tapes were produced with the following set temperatures: 180/190/210°C and 30 rpm.

### iv) Chlorine dioxide exposure:

The exposure of the tape samples to water containing 10 ppm ClO₂ were conducted at KTH lab scale equipment. The pH was held constant at 6.8 ± 0.1 and the experiments were conducted at 70°C. Disk samples through the tape thickness (0.3 mm) were punctured out for the OIT_{190°C} measurements and taken out in regular intervals up to 300 min. exposure time.

### v) OIT measurement of the single antioxidant test samples:

The oxidation induction time (OIT) at 190 °C was determined in a temperature- and energy-calibrated Mettler-Toledo DSC-820 according to ASTM D3895. Calibration of the instrument was performed by melting of highly pure indium and highly pure zinc and by recording the onset of melting and the heat of fusion for each of these substances. The maximum error in temperature from calibration was less than 0.1 K. Each polymer sample (cylindrical geometry with a diameter of 5 mm and thickness of 0.3 ± 0.05 mm) with a weight of 5 ± 1 mg was enclosed in a 100 µl standard aluminum crucible with three holes (diameter = 1 mm) in the cover, heated from 25 °C to 190 °C at a rate of 10 °C min⁻¹ in nitrogen (>99.95 vol.% N₂, < 5 ppm O₂) with a gas flow rate of 50 ml min⁻¹, and allowed to rest for 5 min before the atmosphere was switched to pure oxygen (>99.95 vol.% O₂), also at a flow rate of 50 ml min⁻¹. The samples were maintained at constant temperature, and the exothermal heat associated with oxidation was recorded. The oxidation induction time was determined as the time between the onset of the oxygen flow and the intersection between the isothermal baseline and the tangent at 1.5 W g⁻¹ deviation from the baseline. Each presented data point was the average of two independent measurements.

The tangent method, described above, is the preferred means of determining the intercept point. If the oxidation reaction is slow, however, the exothermic peak becomes a leading edge, where it may be difficult to select an appropriate tangent.

If the selection of the appropriate baseline is not obvious using the tangent method, an offset method may be used. Accordingly, a second baseline is drawn parallel to the first baseline at a distance of 0.05 W/g above the first baseline. The intersection of this second line with the exothermal signal is defined as the onset of oxidation. The results are given in Table 1 below.

Double samples of each condition are measured, and the mean value is calculated. The OIT_{190°C} value of a sample which was not previously exposed to chlorine dioxide signifies the initial OIT_{190°C} value.

Oxidation induction time (OIT_{190°C}) measurements were performed after different exposure times in the above chlorine dioxide-containing water. From the obtained OIT_{190°C} data of the single antioxidant samples, the slope of the curve recording OIT_{190°C} as a function of exposure time was calculated. This curve was obtained over an exposure time interval of 0 to 300 min.

### d) Evaluation method for determination of the resistance to chlorine dioxide-containing water of test specimen containing combinations of antioxidants

In a second test set-up combinations of antioxidants which have been classified as type (B) and type (C) in the first test set-up above were combined respectively and incorporated into the same polyethylene material, as specified above. These samples were exposed to the same chlorine dioxide-containing water specified above, were withdrawn in certain time intervals and subjected to the OIT_{210°C} test (OIT test at a temperature of 210 °C) in the same manner as specified above. The test was terminated after the OIT_{210°C} reached 50% of the initial OIT value at an exposure time of 0 min. This time point was recorded as "OIT_{(210°C),50%}"_{.} Similarily, the time at which OIT_{210°C} reached 75% of the initial value at an exposure time of 0 min was recorded as "OIT_{(210°C),750%}". The specific conditions in this second test set-up were:
Concentration of antioxidant: between 0.1 wt-% and 0.3 wt.-% as indicated below;
concentration of ClO₂: 10 ppm; pH of 6.8 ± 0.1; temperature 70°C

The OIT test of combined antioxidant test samples was always performed at a temperature of 210 °C (OIT_{210°C} measurement).

### 2. Compositions and test results

The bimodal medium density polyethylene powder specified above under e) i) was extruded in a pilot scale extruder (Prism TSE 24TC) together with the selected additives, the obtained mixture was melt mixed and extruded to pellets in the manner as described above.

The following additives were used in the following tests:
Pentaerythrityl-tetrakis(3-(3',5'-di-tert. butyl-4-hydroxyphenyl)propionate) (Irganox^{®} 1010),
1,3,5-tris(3,5-di-tert-butyl-4-hydroxybenzyl)-2,4,6-trimethylbenzene (Irganox^{®} 1330),
1,3,5-Tris(3,5-di-tert-butyl-4-hydroxybenzyl) isocyanurate (Irganox^{®} 3114),
1,2-Bis(3,5-di-tert-butyl-4-hydroxyhydrocinnamoyl)hydrazide (Irganox^{®} MD1024),
Tris(2,4-di-tert. butylphenyl)phosphite (Irgafos^{®} 168),
Hexadecyl 3,5-bis-tert-butyl-4-hydroxybenzoate (Cyasorb^{®} 2908),
Tris(4-tert-butyl-3-hydroxy-2,6-dimethylbenzyl) isocyanurate (Cyanox^{®} 1790),
2,5,7,8-Tetrametyl-2-(4',8',12'-trimethyltridecyl)chroman-6-ol (Vitamin E - Irganox^{®} E 201).

Polyolefin samples were prepared in the above manner which contained only a single antioxidant. These samples served to determine whether the selected antioxidant fulfils the criteria for group (B) or group (C) according to the invention. Table 1 below shows the result for single antioxidant samples.

In the following inventive examples additive mixtures were incorporated into the above bimodal medium density polyethylene in the weight proportions given below. OIT_{210°C} measurements are shown in Table 2 and 3 below.

Table 2 contains OIT_{210°C} measurements without exposure to ClO₂, thus constituting the initial OIT_{210°C} (measuring the time in minutes until the antioxidant was depleted and exothermal heat associated with oxidation occurred).

Table 3 contains OIT_{210°C} measurements where the samples were exposed to ClO₂, and the time in minutes of ClO₂ exposure was recorded, after which OIT_{210°C} reached 75% or 50% of the initial value at an exposure time of 0 min, respectively, thus constituting the values of OIT_{(210°C),75%} and OIT_{(210°C),50%}, respectively.
- Reference¹ Example 1 (R1): Irganox^{®} 1010 (0.2 wt%) + Cyasorb^{®} 2908 (0.1 wt%),
- Reference Example 2 (R2): Cyanox^{®} 1790 (0.2 wt%) + Irganox^{®} 3114 (0.1 wt%),
- Example 3 (E3) : Cyanox^{®} 1790 (0.2 wt%) + Irganox^{®} 3114 (0.1 wt%) + Vitamin E (0.05 wt%)
- Example 4 (E4): Irganox^{®} 1010 (0.2 wt%) + Cyasorb^{®} 2908 (0.1 wt%) + Vitamin E (0.05 wt%),
- Example 5 (E5): Cyanox^{®} 1790 (0.1 wt%) + Irganox^{®} MD 1024 (0.1 wt%) + Irganox^{®} 3114 (0.1 wt%) + Vitamin E (0.05 wt%),
¹The Reference Examples are outside the scope of the invention but useful for its understanding

The following additive mixtures were used as comparative examples:
- Comparative Example 1 (CE1): 0.11 wt.-% Irganox^{®} 1010 + 0.11 wt.-% Irgafos^{®} 168,
- Comparative Example 2 (CE2): 0.3 wt.-% Irganox^{®}1010,
- Comparative Example 3 (CE3): 0.1 wt.-% Irganox^{®} 1330 + 0.2 wt.-% Irganox^{®}1010,
- Comparative Example 4 (CE4): 0.2 wt.-% Irganox^{®} 1330 + 0.1 wt.-% Irgafos^{®} 168,
- Comparative Example 5 (CE5): 0.25% wt.-% Irganox^{®} 1010 + 0.05 wt.-% Irganox^{®} E 201 (Vitamin E).

Table 4 contains OIT_{210°C} measurements without exposure to ClO₂, thus constituting the initial OIT_{210°C} (measuring the time in minutes until the antioxidant was depleted and exothermal heat associated with oxidation occurred).

Table 5 contains OIT_{210°C} measurements where the samples were exposed to ClO₂, and the time in minutes of ClO₂ exposure was recorded, after which OIT_{210°C} reached 75% or 50% of the initial value at an exposure time of 0 min, respectively, thus constituting the values of OIT_{(210°C),75%} and OIT_{(210°C),50%}, respectively.

**Table 1: single antioxidants (initial OIT_{190°C}, without exposure to chlorine dioxide-containing water) and slope of OIT_{190°C} decrease as a function of exposure time to chlorine dioxide-containing water**

| | 0.1% Irganox 1010 | 0.1% Irganox 1330 | 0.1% Cyanox 1790 | 0.1% Cyasorb 2908 | 0.1% Irganox 3114 | 0.1% Irganox MD 1024 | 0.1% Irganox 1076 | 0.1% Hostanox 03 |
|---|---|---|---|---|---|---|---|---|
| Initial OIT_{190°C} (min.) | 49.3 | 60.2 | 82.6 | 12.5 | 29.1 | 73.2 | 39,6 | 49.5 |
| Slope of OIT_{190°C} vs. exposure time | -0.17 | -0.14 | -0.21 | -0.02 | -0.05 | -0.15 | -0.12 | -0.16 |

**Table 2: Inventive examples (PE base resin containing the above antioxidant combination) (initial OIT_{210°C}, without exposure to chlorine dioxide-containing water)**

| | Reference Example 1 | Reference Example 2 | Example 3 | Example 4 | Example 5 |
|---|---|---|---|---|---|
| Initial OIT (min.) | 34 | 26 | 44 | 61 | 57 |

**Table 3: Inventive examples (PE base resin containing the above antioxidant combination) (OIT_{(210 °C),75%} and OIT_{(210°C),50%}, with exposure to chlorine dioxide-containing water at 70 °C, 10 ppm ClO₂ concentration and pH 6.8 ± 0.1)**

| | Reference Example 1 | Reference Example 2 | Example 3 | Example 4 | Example 5 |
|---|---|---|---|---|---|
| OIT_{(210°C),75%} (min.) | 270 | 316 | 479 | 543 | 693 |
| OIT_{(210 °C),50%} (min.) | 660 | 750 | 1043 | 1110 | 1281 |

**Table 4: Comparative Examples (CE) (PE base resin containing the above antioxidant combination) (initial OIT_{210°C} without exposure to chlorine dioxide-containing water)**

| | Comparative Example 1 | Comparative Example 2 | Comparative Example 3 | Comparative Example 4 | Comparative Example 5 |
|---|---|---|---|---|---|
| Initial OIT_{210°C} (min.) | 29 | 26 | 35 | 31 | 80 |

**Table 5: Comparative Examples (CE) (PE base resin containing the above antioxidant combination) (OIT_{(210 °C),750%} and OIT(_{210°C),50%,} with exposure to chlorine dioxide-containing water at 70 °C, 10 ppm ClO₂ concentration and pH 6.8 ± 0.1)**

| | Comparative Example 1 | Comparative Example 2 | Comparative Example 3 | Comparative Example 4 | Comparative Example 5 |
|---|---|---|---|---|---|
| OIT_{(210°C),75%} (min.) | 85 | 45 | 71 | 95 | 161 |
| OIT_{(210°C),50%} (min.) | 220 | 300 | 225 | 269 | 380 |

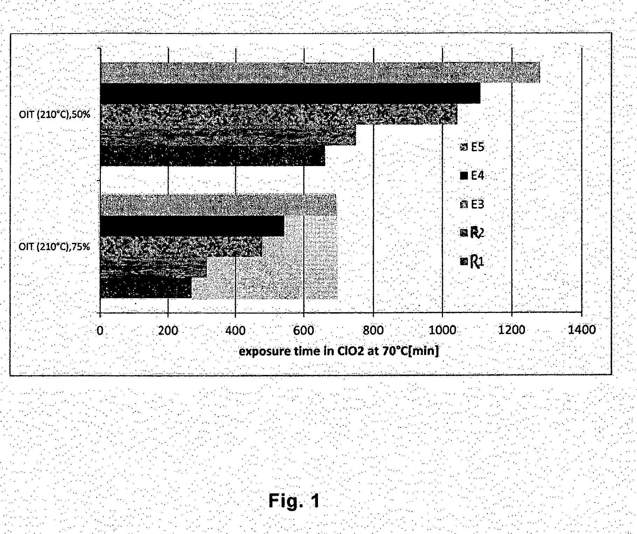

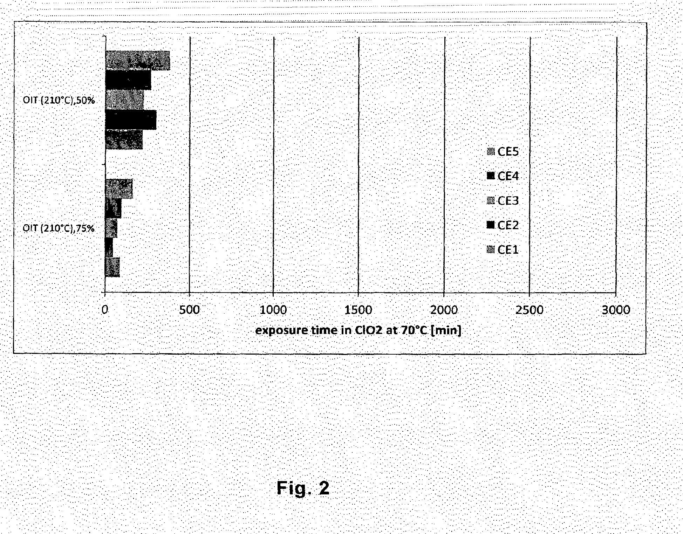

When comparing Fig. 1 and Table 3, showing the results of OIT_{210°C} plotted against the ClO₂ exposure time of the inventive examples and reference examples, with Fig. 2 and Table 5, showing the results of OIT_{210°C} plotted against the ClO₂ exposure time of the comparative examples the strong OIT_{210°C}-increasing effect of the antioxidant combination according to the present invention can be noted. Irrespective of using the antioxidant combination of CE1, CE3 or CE4, the OIT_{(210°C),50%} value achieved with 0.3 wt-% of the single antioxidant Irganox^{®} 1010 added to the PE base resin (CE 2) could hardly be improved. The additional admixture of 0.05 wt-% of vitamin E (CE 5) increased the OIT_{(210°C},_{50%} value modestly by 27%. It should be noted that CE1 represents a typical conventional commercial antioxidant combination for polyolefin resins which can be regarded as a comparative standard.

The results for the antioxidant combinations according to the invention surprisingly performed exceedingly well, as documented in Fig. 1 and in Table 3. Even the composition with the lowest improvement according to Reference Example 1 showed an OIT_{(210°C),50%} value with an increase of 73% over the best-performing composition of the comparative examples (CE5). The admixture of 0.05 wt-% vitamin E (E3 - E5) showed a further increase in the OIT_{(210°C),50%} value, of 39% (E3 <-> E4) and 68% (E4 <-> R1), respectively. Thus, the addition of vitamin E achieved a further "booster" effect on the increase in resistance to chlorine dioxide of the polyolefin compositions according to the present invention.

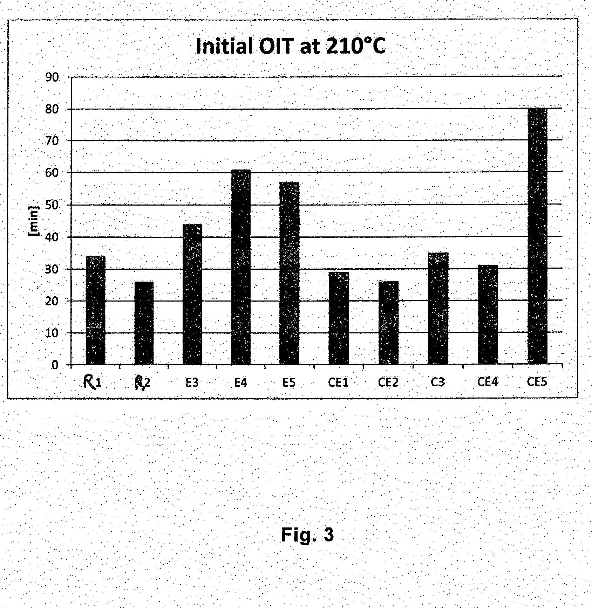

On the other hand, it can be seen from Fig. 3 that no correlation exists between the initial OIT_{210°C} values among the examples R1, R2 and E3 to E5 and the comparative examples CE1 to CE5. Thus a high initial OIT_{210°C} value (before exposure to chlorine dioxide-containing water) of the respective antioxidant combination does not necessarily correlate with a high resistance of the same combination upon exposure to chlorine dioxide-containing water (OIT_{(210°C),50%} values).

Thus, the effects of the inventive compositions were shown to be unexpected and surprising.

## Claims

1. A polyolefin composition comprising
a) a polyolefin base resin (A),
b) an amount of 0.01 to 0.5 wt.-%, based on the total weight of the polyolefin composition, of at least one antioxidant (B) having an initial oxygen induction time (OIT_{190°C}) of more than 35 min., determined according to the OIT test at 190 °C described herein and having a slope of the curve, when OIT_{190°C}, in minutes, is recorded as a function of exposure time, in minutes, in a chlorine dioxide degradation test as described herein, of at least -0.07, and
c) an amount of 0.01 to 0.5 wt.-%, based on the total weight of the Polyolefin composition, of at least one antioxidant (C) having an initial oxygen induction time (OIT_{190°C}) of not more than 35 min., determined according to the OIT test at 190 °C described herein and having a slope of the curve, when OIT_{190°C}, in minutes, is recorded as a function of exposure time, in minutes, in a chlorine dioxide degradation test as described herein, of less than -0.07, and
d) an amount of 0.01 to 0.2 wt.-%, based on the total weight of the polyolefin composition of at least one antioxidant (D) according to formula (I): 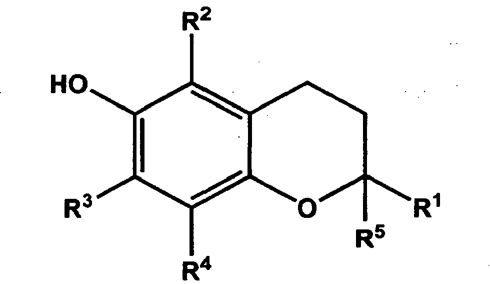 wherein R¹, R², R³, R⁴ and R⁵ independently are H, or non-substituted or substituted aliphatic or aromatic hydrocarbyl radicals which may comprise heteroatoms.
wherein said polyolefin composition shows a resistance against water containing 10 ppm chlorine dioxide at 70 °C and at a pH of 6.8 ± 0.1 of at least 450 min., expressed as the time to reach 50% of the initial oxygen induction time at 210 °C (OIT_{(210°C),50%)}, determined according to the chlorine dioxide degradation test as described herein.

2. The polyolefin composition according to claim 1, wherein the antioxidant (B) is selected from the group consisting of tris(4-tert-butyl-3-hydroxy-2,6-dimethylbenzyl) isocyanurate (Cyanox^{®} 1790), pentaerythrityl-tetrakis(3-(3',5'-di-tert. butyl-4-hydroxyphenyl)-propionate) (Irganox^{®} 1010), 1,2-bis(3,5-di-tert-butyl-4-hydroxyhydrocinnamoyl)hydrazide (Irganox^{®} MD1024), 4, 4'-bis (alpha, alpha-dimethylbenzyl)diphenylamine (Naugard^{®} 445), 1,3,5-tris(3,5-di-tert-butyl-4-hydroxybenzyl)-2,4,6-trimethylbenzene (Irganox^{®} 1330), ethylene bis[3,3-bis(3-tert-butyl-4-hydroxyphenyl)-butyrate] (Hostanox^{®} O3), and octadecyl 3,5-di-(tert)-butyl-4-hydroxyhydrocinnamate (Irganox^{®} 1076).

3. The polyolefin composition according to claim 1 or 2, wherein the antioxidant (C) is selected from the group consisting of 1,3,5-tris(3,5-di-tert-butyl-4-hydroxybenzyl) isocyanurate (Irganox^{®} 3114) and hexadecyl 3,5-bis-tert-butyl-4-hydroxybenzoate (Cyasorb^{®} 2908).

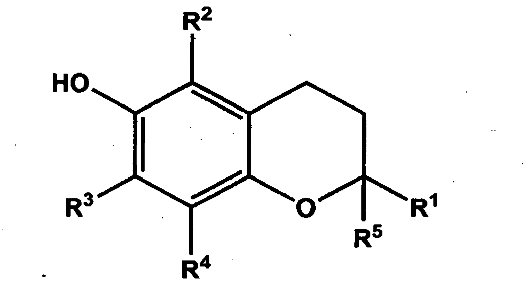

4. The polyolefin composition according to any one of the preceding claims, wherein the polyolefin composition has an OIT_{(210°C),50%} value of at least 500 min.

5. An article comprising a polyolefin composition according to any one of claims 1 to 4.

6. The article according to claim 5, which is a pipe, a fitting or a storage container.

7. Use of a polyolefin composition according to any one of claims 1 to 6 for the production of a pipe, a fitting or a storage container.

8. Use of an article according to claim 5 or 6 for the transport or storage of chlorine dioxide-containing water.

9. Use of a combination of at least one of each antioxidants (B) (C) and (D) in a polyolefin composition comprising a polyolefin base resin (A) for increasing the resistance of an article made of said polyolefin composition which article is in permanent contact with chlorine dioxide-containing water, wherein said antioxidants are the following:
(a) an amount of 0.01 to 0.5 wt.-%, based on the total weight of the polyolefin composition, of at least one antioxidant (B) having an initial oxygen induction time (OIT_{190°C}) of more than 35 min., determined according to the OIT test at 190 °C described herein and having a slope of the curve, when OIT_{190°C}, in minutes, is recorded as a function of exposure time, in minutes, in a chlorine dioxide degradation test as described herein of at least -0.07, and
(b) an amount of 0.01 to 0.5 wt.-%, based on the total weight of the polyolefin composition, of at least one antioxidant (C) having an initial oxygen induction time (OIT_{190°C}) of not more than 35 min., determined according to the OIT test at 190 °C described herein and having a slope of the curve, when OIT_{190°C}, in minutes, is recorded as a function of exposure time, in minutes, in a chlorine dioxide degradation test as described herein of less than -0.07, and
(c) an amount of 0.01 to 0.2 wt.-%, based on the total weight of the polyolefin composition, of at least one antioxidant (D) according to formula (I): 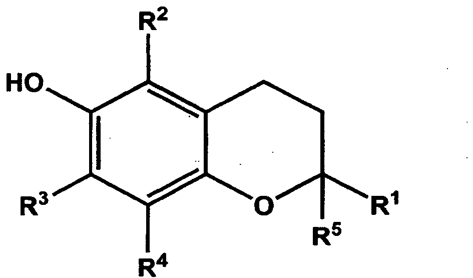 wherein R¹, R², R³, R⁴ and R⁵ independently are H, or non-substituted or substituted aliphatic or aromatic hydrocarbyl radicals which may comprise heteroatoms,
wherein said polyolefin composition shows a resistance against water containing 10 ppm chlorine dioxide at 70 °C and at a pH of 6.8 ± 0.1 of at least 450 min., expressed as the time to reach 50% of the initial oxygen induction time at 210 °C (OIT_{(210°C),50%)}, determined according to the chlorine dioxide degradation test as described herein.

## Patentansprüche

1. Polyolefinzusammensetzung, umfassend
a) ein Polyolefin-Basisharz (A),
b) eine Menge von 0,01 bis 0,5 Gewichts-%, bezogen auf das Gesamtgewicht der Polyolefinzusammensetzung, mindestens eines Antioxidationsmittels (B), welches eine anfängliche Sauerstoffinduktionszeit (OIT_{190 °C}) von mehr als 35 Min., bestimmt nach dem hierin beschriebenen OIT-Test bei 190 °C, aufweist und welches eine Steigung der Kurve, wenn die OIT_{190 °C} in Minuten in einem hierin beschriebenen Chlordioxid-Zersetzungstest als Funktion der Einwirkzeit in Minuten aufgezeichnet wird, von mindestens -0,07 aufweist,
c) eine Menge von 0,01 bis 0,5 Gewichts-%, bezogen auf das Gesamtgewicht der Polyolefinzusammensetzung, mindestens eines Antioxidationsmittels (C), welches eine anfängliche Sauerstoffinduktionszeit (OIT_{190°C}) von nicht mehr als 35 Min., bestimmt nach dem hierin beschriebenen OIT-Test bei 190 °C, aufweist und welches eine Steigung der Kurve, wenn die OIT_{190°C} in Minuten in einem hierin beschriebenen Chlordioxid-Zersetzungstest als Funktion der Einwirkzeit in Minuten aufgezeichnet wird, von weniger als -0,07 aufweist, und
d) eine Menge von 0,01 bis 0,2 Gewichts-%, bezogen auf das Gesamtgewicht der Polyolefinzusammensetzung, mindestens eines Antioxidationsmittels (D) gemäß Formel (I): 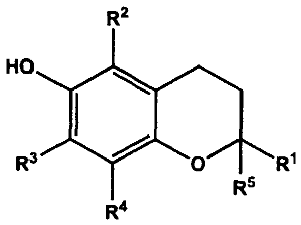 wobei R¹, R², R³, R⁴ und R⁵ unabhängig voneinander H oder nicht substituierte oder substituierte aliphatische oder aromatische Kohlenwasserstoff-Radikale, welche Heteroatome umfassen können, darstellen,
wobei die Polyolefinzusammensetzung eine Beständigkeit gegen 10 ppm Chlordioxid enthaltendes Wasser bei 70 °C und bei einem pH von 6,8 ± 0,1 von mindestens 450 Min. zeigt, ausgedrückt als die Zeit, in der 50% der anfänglichen Sauerstoffinduktionszeit bei 210 °C (OIT_{(210 °C,50%)}, bestimmt nach dem hierin beschriebenen Chlordioxid-Zersetzungstest, erreicht sind.

2. Polyolefinzusammensetzung gemäß Anspruch 1, wobei das Antioxidationsmittel (B) aus der Gruppe, bestehend aus Tris(4-tert-butyl-3-hydroxy-2,6-dimethylbenzyl)isocyanurat (Cyanox^{®} 1790), Pentaerythrityltetrakis(3-(3',5'-di-tert-butyl-4-hydroxyphenyl)-propionat) (Irganox^{®} 1010), 1,2-Bis(3,5-di-tert-butyl-4-hydroxyhydrocinnamoyl) hydrazid (Irganox^{®} MD1024), 4,4'-Bis(alpha, alpha-dimethylbenzyl) diphenylamin (Naugard^{®} 445), 1,3,5-Tris(3,5-di-tert-butyl-4-hydroxybenzyl)-2,4,6-trimethylbenzol (Irganox^{®} 1330), Ethylen-bis[3,3-bis(3-tert-butyl-4-hydroxyphenyl)butyrat] (Hostanox^{®} 03) und Octadecyl-3,5-di-(tert)-butyl-4-hydroxyhydrocinnamat (Irganox^{®} 1076), ausgewählt wird.

3. Polyolefinzusammensetzung gemäß Anspruch 1 oder 2, wobei das Antioxidationsmittel (C) aus der Gruppe, bestehend aus 1,3,5-Tris(3,5-di-tert-butyl-4-hydroxybenzyl)isocyanurat (Irganox^{®} 3114) und Hexadecyl-3,5-bis-tert-butyl-4-hydroxybenzoat (Cyasorb^{®} 2908), ausgewählt wird.

4. Polyolefinzusammensetzung gemäß einem der vorhergehenden Ansprüche, wobei die Polyolefinzusammensetzung einen OIT_{(210 °C),50%}-Wert von mindestens 500 Min. aufweist.

5. Artikel, welcher eine Polyolefinzusammensetzung gemäß einem der Ansprüche 1 bis 4 umfasst.

6. Artikel gemäß Anspruch 5, welcher ein Rohr, ein Fitting oder einen Vorratsbehälter darstellt.

7. Verwendung einer Polyolefinzusammensetzung gemäß einem der Ansprüche 1 bis 6 zur Herstellung eines Rohres, eines Fittings oder eines Vorratsbehälters.

8. Verwendung eines Artikels gemäß Anspruch 5 oder 6 zum Transport oder Lagern von Chlordioxid enthaltendem Wasser.

9. Verwendung einer Kombination von mindestens einem von jedem Antioxidationsmittel (B), (C) und (D) in einer Polyolefinzusammensetzung, welche ein Polyolefin-Basisharz (A) zur Erhöhung der Beständigkeit eines Artikels, der aus der Polyolefinzusammensetzung gemacht ist, umfasst, wobei der Gegenstand in ständigem Kontakt mit Chlordioxid enthaltendem Wasser steht, wobei die Antioxidationsmittel die folgenden darstellen:
(a) eine Menge von 0,01 bis 0,5 Gewichts-%, bezogen auf das Gesamtgewicht der Polyolefinzusammensetzung, mindestens eines Antioxidationsmittels (B), welches eine anfängliche Sauerstoffinduktionszeit (OIT_{190 °C}) von mehr als 35 Min., bestimmt nach dem hierin beschriebenen OIT-Test bei 190 °C, aufweist und welches eine Steigung der Kurve, wenn die OIT_{190 °C} in Minuten in einem hierin beschriebenen Chlordioxid-Zersetzungstest als Funktion der Einwirkzeit in Minuten aufgezeichnet wird, von mindestens -0,07 aufweist,
(b) eine Menge von 0,01 bis 0,5 Gewichts-%, bezogen auf das Gesamtgewicht der Polyolefinzusammensetzung, mindestens eines Antioxidationsmittels (C), welches eine anfängliche Sauerstoffinduktionszeit (OIT_{190°C}) von nicht mehr als 35 Min., bestimmt nach dem hierin beschriebenen OIT-Test bei 190 °C, aufweist und welches eine Steigung der Kurve, wenn die OIT_{190°C} in Minuten in einem hierin beschriebenen Chlordioxid-Zersetzungstest als Funktion der Einwirkzeit in Minuten aufgezeichnet wird, von weniger als -0,07 aufweist, und
(c) eine Menge von 0,01 bis 0,2 Gewichts-%, bezogen auf das Gesamtgewicht der Polyolefinzusammensetzung, mindestens eines Antioxidationsmittels (D) gemäß Formel (I): 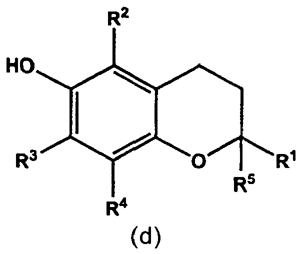 wobei R¹, R², R³, R⁴ und R⁵ unabhängig voneinander H oder nicht substituierte oder substituierte aliphatische oder aromatische Kohlenwasserstoff-Radikale, welche Heteroatome umfassen können, darstellen,
wobei die Polyolefinzusammensetzung eine Beständigkeit gegen 10 ppm Chlordioxid enthaltendes Wasser bei 70 °C und bei einem pH von 6,8 ± 0,1 von mindestens 450 Min. zeigt, ausgedrückt als die Zeit, in der 50% der anfänglichen Sauerstoffinduktionszeit bei 210 °C (OIT_{(210 °C)},_{50%}), bestimmt nach dem hierin beschriebenen Chlordioxid-Zersetzungstest, erreicht sind.

## Revendications

1. Composition de polyoléfine comprenant
a) une résine de base de polyoléfine (A),
b) une quantité de 0,01 à 0,5 % en poids, par rapport au poids total de la composition de polyoléfine, d'au moins un antioxydant (B) ayant un temps d'induction d'oxygène initial (OIT_{190°C}), déterminé conformément au test OIT à 190°C décrit ici, supérieur à 35 minutes, et ayant une pente de la courbe, quand OIT_{190°C}, en minutes, est enregistré en fonction du temps d'exposition, en minutes, dans un test de dégradation du dioxyde de chlore tel que décrit ici, d'au moins -0,07,
c) une quantité de 0,01 à 0,5 % en poids, par rapport au poids total de la composition de polyoléfine, d'au moins un antioxydant (C) ayant un temps d'induction d'oxygène initial (OIT_{190°C}), déterminé conformément au test OIT à 190°C décrit ici, ne dépassant pas 35 minutes, et ayant une pente de la courbe, quand OIT_{190°C}, en minutes, est enregistré en fonction du temps d'exposition, en minutes, dans un test de dégradation du dioxyde de chlore tel que décrit ici, inférieure à -0,07, et
d) une quantité de 0,01 à 0,2 % en poids, par rapport au poids total de la composition de polyoléfine, d'au moins un antioxydant (D) de formule (I) : 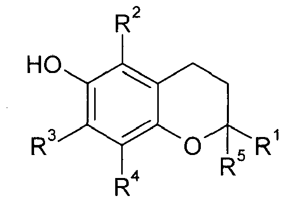 dans laquelle R¹, R², R³, R⁴ et R⁵ sont indépendamment H ou des radicaux hydrocarbyle aliphatiques ou aromatiques, substitués ou non substitués, qui peuvent comprendre des hétéroatomes,
laquelle composition de polyoléfine présente une résistance à de l'eau contenant 10 ppm de dioxyde de chlore à 70°C et à un pH de 6,8 ± 0,1, exprimée par le temps nécessaire pour atteindre 50 % du temps d'induction d'oxygène initial à 210°C (OIT_{(210°C),50%)}, déterminé conformément au test de dégradation de dioxyde de chlore tel que décrit ici, d'au moins 450 minutes.

2. Composition de polyoléfine selon la revendication 1, dans laquelle l'antioxydant (B) est choisi dans le groupe constitué par l'isocyanurate de tris(4-tert-butyl-3-hydroxy-2,6-diméthylbenzyle) (Cyanox® 1790), le tétrakis(3-(3',5'-di-tert-butyl-4-hydroxyphényl)propionate de pentaérythrityle (Irganox® 1010), le 1,2-bis(3,5-di-tert-butyl-4-hydroxyhydrocinnamoyl)hydrazide (Irganox® MD1024), la 4,4'-bis(α,α-(diméthylbenzyl)diphénylamine (Naugard® 445), le 1,3,5-tris(3,5-di-tert-butyl-4-hydroxybenzyl)-2,4,6-triméthylbenzène (Irganox® 1330), le bis[3,3-bis(3-tert-butyl-4-hydroxyphényl)butyrate] d'éthylène (Hostanox® 03), et le 3,5-di-tert-butyl-4-hydroxyhydrocinnamate d'octadécyle (Irganox® 1076).

3. Composition de polyoléfine selon la revendication 1 ou 2, dans laquelle l'antioxydant (C) est choisi dans le groupe constitué par l'isocyanurate de 1,3,5-tris(3,5-di-tert-butyl-4-hydroxybenzyle) (Irganox® 3114) et le 3,5-bis-tert-butyl-4-hydroxybenzoate d'hexadécyle (Cyasorb® 2908).

4. Composition de polyoléfine selon l'une quelconque des revendications précédentes, laquelle composition de polyoléfine a une valeur OIT_{(210°C),50%} d' au moins 500 minutes.

5. Article comprenant une composition de polyoléfine selon l'une quelconque des revendications 1 à 4.

6. Article selon la revendication 5, qui est un tuyau, un raccord, ou un récipient de stockage.

7. Utilisation d'une composition de polyoléfine selon l'une quelconque des revendications 1 à 6 pour la production d'un tuyau, d'un raccord ou d'un récipient de stockage.

8. Utilisation d'un article selon la revendication 5 ou 6 pour le transport ou le stockage d'eau contenant du dioxyde de chlore.

9. Utilisation d'une combinaison d'au moins l'un de chacun des antioxydants (B), (C) et (D) dans une composition de polyoléfine comprenant une résine de base de polyoléfine (A) pour augmenter la résistance d'un article fait en ladite composition de polyoléfine, l'article étant en contact permanent avec de l'eau contenant du dioxyde de chlore, dans laquelle lesdits antioxydants sont les suivants :
(a) une quantité de 0,01 à 0,5 % en poids, par rapport au poids total de la composition de polyoléfine, d'au moins un antioxydant (B) ayant un temps d'induction d'oxygène initial (OIT_{190°C}), déterminé conformément au test OIT à 190°C décrit ici, supérieur à 35 minutes, et ayant une pente de la courbe, quand OIT_{190°C}, en minutes, est enregistré en fonction du temps d'exposition, en minutes, dans un test de dégradation du dioxyde de chlore tel que décrit ici, d'au moins -0,07,
(b) une quantité de 0,01 à 0,5 % en poids, par rapport au poids total de la composition de polyoléfine, d'au moins un antioxydant (C) ayant un temps d'induction d'oxygène initial (OIT_{190°C}), déterminé conformément au test OIT à 190°C décrit ici, ne dépassant pas 35 minutes, et ayant une pente de la courbe, quand OIT_{190°C}, en minutes, est enregistré en fonction du temps d'exposition, en minutes, dans un test de dégradation du dioxyde de chlore tel que décrit ici, inférieure à -0,07, et
(c) une quantité de 0,01 à 0,2 % en poids, par rapport au poids total de la composition de polyoléfine, d'au moins un antioxydant (D) de formule (I) : 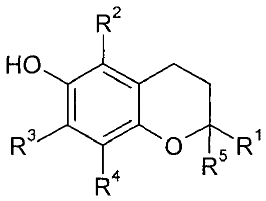 dans laquelle R¹, R², R³, R⁴ et R⁵ sont indépendamment H ou des radicaux hydrocarbyle aliphatiques ou aromatiques, substitués ou non substitués, qui peuvent comprendre des hétéroatomes,
dans laquelle ladite composition de polyoléfine présente une résistance à de l'eau contenant 10 ppm de dioxyde de chlore à 70°C et à un pH de 6,8 ± 0,1, exprimée par le temps nécessaire pour atteindre 50 % du temps d'induction d'oxygène initial à 210°C (OIT_{(210°C), 50%}), déterminé conformément au test de dégradation de dioxyde de chlore tel que décrit ici, d'au moins 450 minutes.
